(19) **Europäisches Patentamt / European Patent Office / Office européen des brevets**

(11) **EP 2 261 307 A1**

(12) **EUROPEAN PATENT APPLICATION**
published in accordance with Art. 153(4) EPC

(43) Date of publication:
**15.12.2010 Bulletin 2010/50**

(21) Application number: **09719495.5**

(22) Date of filing: **12.03.2009**

(51) Int Cl.:
*C10G 2/00* (2006.01)          *B01J 38/00* (2006.01)
*B01J 38/10* (2006.01)

(86) International application number:
**PCT/JP2009/054763**

(87) International publication number:
**WO 2009/113614 (17.09.2009 Gazette 2009/38)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **14.03.2008 JP 2008065769**
**14.03.2008 JP 2008065774**

(71) Applicants:
• **Japan Oil, Gas and Metals National Corporation**
**Kawasaki-shi**
**Kanagawa-ken 212-8554 (JP)**
• **INPEX Corporation**
**Tokyo 107-6332 (JP)**

• **JX Nippon Oil & Energy Corporation**
**Chiyoda-ku**
**Tokyo 100-8162 (JP)**
• **Japan Petroleum Exploration Co., Ltd.**
**Tokyo 100-0005 (JP)**
• **Cosmo Oil Co., Ltd.**
**Tokyo 105-8528 (JP)**
• **Nippon Steel Engineering Co., Ltd**
**Tokyo 141-8604 (JP)**

(72) Inventor: **TASAKA, Kazuhiko**
**Yokohama-shi**
**Kanagawa 2310815 (JP)**

(74) Representative: **Vossius & Partner**
**Siebertstrasse 4**
**81675 München (DE)**

(54) **METHOD FOR REMOVING MAGNETIC PARTICLES FROM FISCHER-TROPSCH SYNTHETIC CRUDE OIL AND METHOD FOR MANUFACTURING FISCHER-TROPSCH SYNTHETIC CRUDE OIL**

(57)     A method of separating magnetic particles from Fischer-Tropsch synthetic crude oil is provided, the method including: a solid-liquid separation step of separating a solid component from Fischer-Tropsch synthetic crude oil produced by a Fischer-Tropsch synthesis reaction; and a magnetic separation step of capturing magnetic particles contained in the Fischer-Tropsch synthetic crude oil subjected to the solid-liquid separation step and separating the magnetic particles from the Fischer-Tropsch synthetic crude oil, wherein the magnetic separation step is carried out by means of a high gradient magnetic separator including a washing liquid introduction line for introducing washing liquid used to intermittently clean the captured magnetic particles and a washing liquid discharge line for discharging the washing liquid which has been used to clean the magnetic particles.

FIG. 1

**Description**

TECHNICAL FIELD

The present invention relates to a method of removing magnetic particles, contained in FT synthetic crude oil obtained by a Fischer-Tropsch synthesis method (hereinafter, simply referred to as "FT synthesis method") using carbon monoxide and hydrogen as raw materials, from a slurry by means of a magnetic separator.
Priority is claimed on Japanese Patent Application No. 2008-65774 and Japanese Patent Application No. 2008-65769, filed March 14, 2008, the contents of which are incorporated herein by reference.

BACKGROUND ART

In recent years, a clean liquid fuel containing a low content of sulfur and aromatic hydrocarbons and compatible with the environment has been required from the viewpoint of the reduction of environmental burdens. Thus, in the oil industry, an FT synthesis method using carbon monoxide and hydrogen as raw materials has been examined as a method of producing the clean liquid fuel. According to the FT synthesis method, a liquid fuel base stock containing a high content of paraffin and not containing sulfur, for example, a diesel fuel base stock can be produced. For this reason, expectations are high for the FT synthesis method. For example, a clean liquid fuel compatible with the environment is proposed in Patent Document 1.
Patent Document 1: Japanese Unexamined Patent Application, First Publication No. 2004-323626
Conventionally, an iron-based solid catalyst was widely used as a catalyst for the FT synthesis method using carbon monoxide and hydrogen as raw materials. However, in recent years, a cobalt-based solid catalyst has been developed in view of high activity. Here, an example of a reaction type of the FT synthesis method includes a fixed bed-type, a fluidized bed-type, a moving bed-type, or the like, but in any case, a heterogeneous catalyst, which is a solid catalyst, is used.
Therefore, a large amount of residual catalyst is contained in the FT synthetic crude oil obtained by the FT synthesis reaction. The FT synthetic crude oil is subjected to upgrading processes such as distillation and hydrotreating processes to thereby obtain a product such as fuel oil. However, at this time, since the residual catalyst affects a post-process, for example, the upgrading process, it is necessary to sufficiently remove the residual catalyst from the FT synthetic crude oil.
Regardless of FT synthesis reaction type, the residual catalyst remaining in the FT synthetic crude oil is in a form of a microparticle in many cases. For this reason, it is advantageous to separate the microparticles from the FT synthetic crude oil by means of a magnetic separation. That is, magnetic particles are magnetically separated from the FT synthetic crude oil by means of a high gradient magnetic separator. In the high gradient magnetic separator, ferromagnetic filling materials are disposed in a uniform high-magnetic-field space formed by an external electromagnetic coil, and ferromagnetic or paramagnetic particles are captured to surfaces of the filling materials by a high magnetic field having intensity of 10,000 to 50,000 Gauss which is generally formed in the vicinity of the filling materials, thereby separating the magnetic particles such as the residual catalyst from the FT synthetic crude oil. The filling materials are cleaned by washing liquid, and then the captured particles are removed. The filling material washing operation is intermittently carried out in such a manner that the washing liquid is supplied to the filling materials via a washing liquid introduction pipe for introducing the washing liquid to the filling materials and a washing liquid discharge pipe for discharging the washing liquid which has been used to clean the filling materials.

DISCLOSURE OF THE INVENTION

PROBLEM THAT THE INVENTION IS TO SOLVE

However, since the particles contained in the FT synthetic crude oil are fine and the amount thereof is large, the filling materials need to be frequently cleaned. That is, when a magnetic separator is used at the downstream of an FT synthetic reactor, FT slurry having a high catalyst concentration is directly subjected to a process of the magnetic separator. Accordingly, capturing efficiency is immediately reduced. For this reason, the washing interval has to be short. It is inefficient.
The present invention is contrived in view of the above-described circumstances, and an object of the invention is to provide a method of efficiently removing magnetic particles, contained in FT synthetic crude oil obtained by a Fischer-Tropsch synthesis method, from a slurry by means of a magnetic separator.

MEANS FOR SOLVING THE PROBLEM

According to an aspect of the invention, there is disclosed a method of removing magnetic particles from Fischer-Tropsch synthetic crude oil, the method including: a solid-liquid separation step of separating a solid component from Fischer-Tropsch synthetic crude oil produced by a Fischer-Tropsch synthesis reaction; and a magnetic separation step of capturing magnetic particles contained in the Fischer-Tropsch synthetic crude oil subjected to the solid-liquid separation step and separating the magnetic particles from the Fischer-Tropsch synthetic crude oil. The magnetic separation step is carried out by means of a high gradient magnetic separator including a washing liquid introduction line for introducing washing liquid used to intermittently clean the captured magnetic particles and a washing liquid discharge line for discharging the washing liquid which has been used to clean the magnetic particles.

In the method of removing the magnetic particles from the Fischer-Tropsch synthetic crude oil, the solid-liquid separation step may be carried out by using any one of a filter, a gravitational sedimentation separator, a cyclone, and a centrifugal separator.

According to another aspect of the invention, there is disclosed a method of producing Fischer-Tropsch synthetic crude oil, the method including: a hydrogen-reduction treatment step of performing a reduction treatment process on a Fischer-Tropsch catalyst remaining in slurry by a gas-liquid contact of hydrogen and the slurry containing the Fischer-Tropsch catalyst flowed out from a Fischer-Tropsch synthesis reactor at 270°C or more; and a magnetic separation step of capturing the Fischer-Tropsch catalyst reduced by hydrogen by means of a high gradient magnetic separator and separating the Fischer-Tropsch catalyst from the slurry.

In the method of producing the Fischer-Tropsch synthetic crude oil, there may be further provided a solid-liquid separation step of separating a solid component from the slurry by using any one of a filter, a gravitational sedimentation separator, a cyclone, and a centrifugal separator. The solid-liquid separation step is carried out before the hydrogen-reduction treatment step, between the hydrogen-reduction treatment step and the magnetic separation step, or after the magnetic separation step.

In the method of producing the Fischer-Tropsch synthetic crude oil, the Fischer-Tropsch catalyst separated from the slurry in the magnetic separation step may be recycled to the Fischer-Tropsch synthesis reactor.

In the method of producing the Fischer-Tropsch synthetic crude oil, there may be further provided a hydrotreating step of performing a hydrotreating process on the obtained synthetic crude oil, wherein excessive hydrogen used for the hydrogen-reduction treatment process is used again as a part of hydrogen for the hydrotreating step for synthetic crude oil.

ADVANTAGE OF THE INVENTION

According to the method of removing the magnetic particles from the Fischer-Tropsch synthetic crude oil, before the magnetic separation is carried out, the solid component is separated from the FT synthetic crude oil to thereby reduce a catalyst concentration in the synthetic crude oil through the solid-liquid separation step. Accordingly, it is possible to lengthen a washing interval of the filling material in the magnetic separator and thus to improve efficiency.

According to the method of producing the Fischer-Tropsch synthetic crude oil, the magnetism of FT synthesis catalyst becomes strong by a reduction of the FT synthesis catalyst remaining in the slurry in the presence of hydrogen, before the magnetic separation is carried out. Accordingly, it is possible to improve magnetic separation efficiency.

Further, since the FT synthetic crude oil, from which the residual FT synthetic catalyst is removed, is subjected to the hydrorefining process in many cases, it is possible to efficiently use excessive hydrogen in the hydrogen-reduction treatment step, as hydrogen for the hydrorefining process.

BRIEF DESCRIPTION OF THE DRAWINGS

FIG. 1 is a schematic view showing a fuel producing plant according to a first embodiment of the invention.
FIG. 2 is a schematic view showing a high gradient magnetic separator used in the invention.
FIG. 3 is a schematic view showing the fuel producing plant according to a second embodiment of the invention.
FIG. 4 is a schematic view showing the high gradient magnetic separator used in the invention.

10:         an FT synthesis reactor
20, 30:     separators
40:         a fractionator
120, 140:   separators
130:        a hydrogen-reduction tower.

BEST MODE FOR CARRYING OUT THE INVENTION

(FIRST EMBODIMENT)

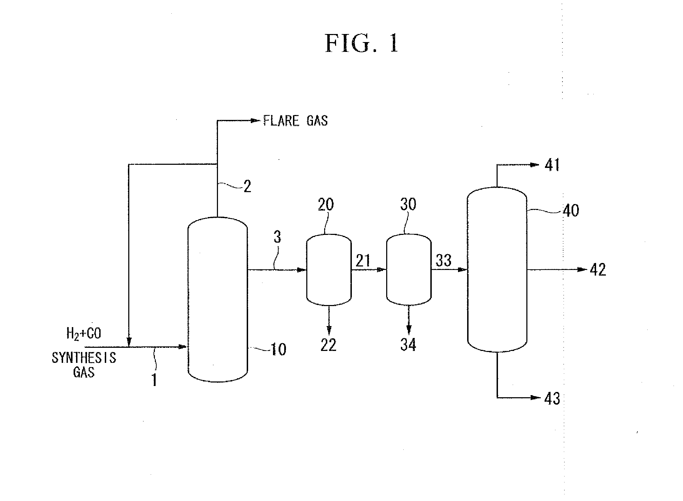

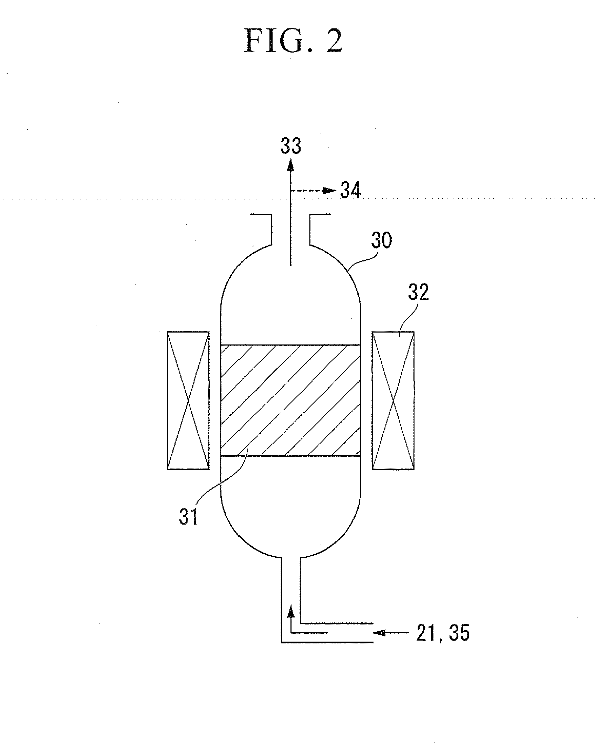

A first embodiment of the invention will be described with reference to FIGs. 1 and 2.
As shown in FIG. 1, synthesis gas containing carbon monoxide gas and hydrogen gas is supplied to an FT synthesis reactor 10 via a line 1 as a synthesis gas supply pipe, thereby producing liquid hydrocarbons by means of an FT synthesis reaction in the FT synthesis reactor 10. The synthesis gas can be obtained, for example, by appropriately reforming hydrocarbon. A typical example of hydrocarbon includes methane, natural gas, LNG (liquid natural gas), and the like. As the reforming method, a partial oxidization reforming method (POX) using oxygen, an auto thermal reforming method (ATR) that is a combination of the partial oxidation reforming method and a steam reforming method, a carbon dioxide gas reforming method, or the like may be used.

Next, an FT synthesis process will be described with reference to FIG. 1.
An FT synthesis reaction system includes the FT synthesis reactor 10. The FT synthesis reactor 10 is an example of a reactor for obtaining liquid hydrocarbons by synthesizing synthesis gas, and serves as an FT synthesis reactor for synthesizing the liquid hydrocarbons from the synthesis gas by means of an FT synthesis reaction. The reactor 10 may be, for example, a bubble column reactor.

A reactor body of the FT synthesis reactor 10 is configured as a metallic vessel formed in a substantially cylindrical shape, and has a diameter in the range of from approximately 1 to approximately 20 meters and preferably in the range of from approximately 2 to approximately 10 meters. The reactor body has a height in the range of from approximately 10 to approximately 50 meters and preferably in the range of from approximately 15 to approximately 45 meters. The reactor body contains therein a slurry in which solid catalyst particles are suspended in the liquid hydrocarbons (product of the FT synthesis reaction).
A part of the slurry contained in the FT synthesis reactor 10 is introduced from a body portion of the FT synthesis reactor 10 into a separator 20 via a line 3 as a slurry transfer pipe. Unreacted synthesis gas or the like is discharged from the top of the FT synthesis reactor 10 via a line 2 as a synthesis gas discharge pipe, and a part thereof is recycled to the FT synthesis reactor 10 via the line 1.

The synthesis gas supplied to the FT synthesis reactor 10 via the line 1 is injected from a synthesis gas supply port (not shown) to the slurry contained in the FT synthesis reactor 10. When the synthesis gas comes into contact with the catalyst particles, a synthesis reaction (FT synthesis reaction) of the liquid hydrocarbons occurs due to the contact reaction. Specifically, as shown in the following chemical formula (1), a synthesis reaction occurs between hydrogen gas and carbon monoxide gas.

$$2nH_2 + nCO \rightarrow (CH_2)_n + nH_2O \qquad (1)$$

Specifically, the synthesis gas is flowed into the bottom of the FT synthesis reactor 10 and moves upward in the slurry contained in the FT synthesis reactor 10. At this time, in the FT synthesis reactor 10, hydrocarbons are produced by the reaction between the hydrogen gas and the carbon monoxide gas contained in the synthesis gas by means of the above-described FT synthesis reaction. Additionally, heat is generated due to the synthesis reaction, but the heat may be removed by means of appropriate cooling means.

An example of a metallic catalyst includes a supported type, a precipitation type, and the like, but in any case, the metallic catalyst is a solid magnetic particle containing iron group metal. An appropriate amount of metal is contained in the solid particle, but 100% of the solid particle may be metal. Iron is exemplified as the iron group metal, but cobalt is desirable in view of high activity.
A composition ratio of the synthesis gas supplied to the FT synthesis reactor 10 is set to a composition ratio suitable for the FT synthesis reaction (for example, $H_2$:CO = 2:1 (molar ratio)). Additionally, a pressure of the synthesis gas supplied to the FT synthesis reactor 10 can be increased up to a pressure (for example, 3.6 MPaG) suitable for the FT synthesis reaction by means of an appropriate compressor (not shown). However, the compressor may not be provided in some cases.

The liquid hydrocarbons synthesized in the FT synthesis reactor 10 are extracted from the FT synthesis reactor 10 in a form of a slurry having the catalyst particles suspended in the liquid hydrocarbons via the line 3 connected to the body portion of the FT synthesis reactor 10, and introduced into the separator 20. The separator 20 separates the introduced slurry into a solid component such as a catalyst particle by means of solid-liquid separation means. As the solid-liquid separation means, a known technique may be adopted. Desirably, a filter using an appropriate filter such as a sintered metallic filter, a gravitational sedimentation separator, a cyclone, a centrifugal separator, and the like are exemplified.
Subsequently, a high gradient magnetic separator 30 magnetically separates the catalyst particle, which cannot be separated by the separator 20, from the synthetic crude oil obtained by separating the solid component such as the catalyst particle from the slurry by means of magnetic separation means.

Hereinafter, the magnetic separation process will be described.

That is, the FT synthetic crude oil is subjected to a magnetic separation process of the high gradient magnetic separator 30. The solid component such as the catalyst particle is discharged from the high gradient magnetic separator 30 via a line 34 as a catalyst particle discharge pipe. The FT synthetic crude oil, from which the solid component such as the catalyst particle is separated, is introduced into a fractionator 40 via a line 33 as a synthetic crude oil transfer pipe. In the type of the iron group metal as the FT synthesis catalyst, it is found that it has a predetermined magnetic susceptibility and paramagnetism is exhibited regardless of whether it is iron or cobalt. Accordingly, the removal by means of the magnetic separation is effective to a certain degree.

In the high gradient magnetic separator 30 used in the invention, ferromagnetic filling materials are disposed in a uniform high-magnetic-field space formed by an external electromagnetic coil, and ferromagnetic or paramagnetic particles are captured to surfaces of the filling materials by a high magnetic field gradient of 1,000 to 20,000 Gauss/cm in general formed in the periphery of the filling materials, thereby separating the solid magnetic particles such as the catalyst particles from a liquid component containing the liquid hydrocarbons. The filling materials are cleaned, and then the captured particles are removed. As the high gradient magnetic separator 30, for example, a commercially available device known by the trademark as "FEROSEP" and the like may be used.

As the ferromagnetic filling material, a ferromagnetic fine-wire assembly such as steel net or steel wool having a diameter of 1 to 1,000 $\mu$m in general, expanded metal, and a conchoidal metallic fine piece may be used. As the metal, it is desirable to use stainless steel having excellent corrosion resistance, heat resistance, and strength.

In addition, the ferromagnetic metal piece proposed in Japanese Patent Application, First Publication No. H07-70568 may be desirably used. That is, the ferromagnetic metal piece is formed into a plate having two planes; a larger-area surface among the two surfaces has the same area as that of a circle having a diameter of R = 0.5 to 4.0 mm; a ratio (R/d) between the diameter R and a maximum thickness d of the plate is in the range of 5 to 20; and the plate is made of Fe-Cr base alloy mainly containing Fe and additionally containing Cr of 5 to 25 wt%, Si of 0.5 to 2 wt%, and C of 2 wt% or less.

In the process of separating the magnetic particles, which cannot be separated by the separator 20, from the synthetic crude oil subjected to the process of the separator 20, the synthetic crude oil is introduced into the magnetic field space of the high gradient magnetic separator 30, and the magnetic particles are captured to the ferromagnetic filling materials disposed in the magnetic field space, thereby separating the magnetic particles from the synthetic crude oil. Next, in the process of washing and removing the magnetic particles captured to the filling materials, the ferromagnetic filling materials having the magnetic particles captured thereto are cleaned, thereby removing the magnetic particles from the filling materials by means of washing liquid. The filling materials have a limited surface area used to capture the magnetic particles. Thus, when the magnetic particle capturing amount is equal to a certain amount or a limited amount, the magnetic field is terminated so as to separate the magnetic particles from the filling materials. Subsequently, the filling materials are cleaned by the washing liquid, and then the magnetic particles are discharged to the outside of the magnetic separator together with the washing liquid. A magnetic separation condition for the magnetic particles contained in the washing liquid and a washing and removing condition for the magnetic particles captured to the filling materials will be described herebelow.

As the magnetic separation condition for the high gradient magnetic separator 30, the magnetic field intensity is desirably 10,000 Gauss or more and also desirably 25,000 Gauss or more. A liquid temperature (process temperature) in the magnetic separator is desirably equal to or more than 100°C and equal to or less than 400°C, more desirably equal to or more than 100°C and equal to or less than 300°C, and particularly desirably equal to or more than 100°C and equal to or less than 200°C. A liquid residence time (residence time) is desirably 15 seconds or more and more desirably 30 seconds or more.

Next, when the magnetic separation operation for the magnetic particles is continuously carried out, the removal ratio of the magnetic particles using the filling materials decreases in accordance with an increase in amount of the magnetic particles captured by the filling materials. Accordingly, in order to maintain the removal ratio, it is necessary to carry out the washing and removing process for discharging the magnetic particles captured by the filling materials to the outside of the magnetic separator after the magnetic separation operation is continued for a predetermined time. In an industrial operation, liquid containing the magnetic particles may bypass the high gradient magnetic separator during the washing and removing process. However, when the time required for the washing operation is long, a large amount of the magnetic particles flows into the fractionator 40. Accordingly, a spare switching separator may be provided if necessary.

The washing liquid used for the washing and removing process is not particularly limited, but for example, the FT synthetic crude oil, from which the magnetic particles were removed by the magnetic separator 30, extracted via the line 33 may be used. Alternatively, a naphtha fraction, a middle fraction, and a wax fraction distilled by the fractionator 40 may be used. Alternatively, a kerosene fraction and a gas oil fraction obtained by hydrogenating these fractions or a product such as diesel fuel obtained by arbitrarily mixing the kerosene fraction and the gas oil fraction may be used.

According to the invention, the FT synthetic crude oil obtained after the magnetic separation via the line 33 can be desirably used as the washing liquid.

In the washing and removing process, the magnetic field formed in the vicinity of the filling materials disappears (the current supply to the magnetic-separation electromagnetic coil stops), and the washing liquid is introduced from the bottom of the separator into the high gradient magnetic separator 30 via the washing liquid supply pipe so as to allow the magnetic particles captured to the filling materials to be flowed outside together with the washing liquid. The washing liquid is discharged to the outside of the system via the line 34. As the washing condition, a washing-liquid linear velocity is in the range of 1 to 10 cm/sec and desirably in the range of 2 to 6 cm/sec.

Hereinafter, the magnetic separation process will be described with reference to FIG. 2.

FIG. 2 is a schematic view showing the high gradient magnetic separator 30 used in the invention. A separation portion of the high gradient magnetic separator 30 is formed into a vertical filling vessel which is filled with the ferromagnetic filling materials. A filling tank 31 filled with the filling materials is magnetized by the magnetic flux formed by an electromagnetic coil 32 disposed on the outside of the vertical filling vessel to thereby form a high gradient magnetic separation portion. This portion corresponds to the uniform high-magnetic-field space formed by the external electromagnetic coil 32. The synthetic crude oil heated up to a temperature suitable for the operation is introduced into the bottom of the high gradient magnetic separator 30 via a line 21 as a synthetic crude oil transfer pipe, and passes through the high gradient magnetic separator 30 from the downside to the upside at a predetermined flow rate (desirably, a flow rate at which the liquid residence time in the magnetic separation portion is 15 seconds or more), thereby discharging the synthetic crude oil from the top of the high gradient magnetic separator 30 via the line 33. At this time, the magnetic particles contained in the synthetic crude oil are captured to the surfaces of the filling materials during a time when the synthetic crude oil passes through the magnetic separation portion.

During a time when the FT synthetic crude oil passes through the high gradient magnetic separator 30, the washing liquid is bypassed via a washing liquid bypass pipe (not shown). During a time when the filling materials having the magnetic particles captured thereto are cleaned, the washing liquid is introduced into the high gradient magnetic separator 30 via a line 35 as a washing liquid introduction pipe. The synthetic crude oil may be bypassed via a synthetic crude oil bypass pipe (not shown) or may be transferred to the fractionator 40. In this manner, it is possible to carry out the switching operation of the removing operation and the washing operation, and the repeated continuous operation. The washing and removing process can be carried out on the basis of, for example, the method disclosed in Japanese Patent Application, First Publication No. H06-200260.

Here, since the particle in the FT slurry passing through the FT synthesis reactor 10 is fine and the amount is large, when the FT slurry passing through the FT synthesis reactor 10 is directly subjected to the magnetic separation process, the frequency of washing filling materials increases, thereby operation of the magnetic separation process becomes complicated.

Therefore, according to the invention, a solid-liquid separation process is provided at the upstream of the magnetic separation process in addition to the magnetic separation process, thereby lengthening the intermittent washing interval in the magnetic separation process.

The solid-liquid separation process as a pre-process separately carried out in addition to the magnetic separation process is carried out by adopting a filter using an appropriate filter such as a sintered metallic filter, a gravitational sedimentation separator, a cyclone, a centrifugal separator, or the like. All known techniques may be adopted. For example, a sedimentation tank (a gravitational sedimentation separator) may be used which is filled with a slurry for a predetermined time so that solid particles contained in the slurry are spontaneously settled out. As a sedimentation separator, it is advantageous that the gravitational sedimentation separator have a simple structure. All of a continuous type or a batch type may be used. In FIG. 1, a case is exemplified in which one solid-liquid separation process is provided before the magnetic separation process, but plural solid-liquid separation processes may be provided. The solid particles separated from the slurry are discharged from the separator 20 via a line 22 as a solid particle discharge pipe. The FT synthetic crude oil, from which the solid particles are separated, is introduced into the high gradient (magnetic separator 30 via the line 21. The operation in the high gradient magnetic separator 30 is carried out as described above.

The FT synthetic crude oil, from which the solid particles are removed by the separators 20 and 30, is introduced into the fractionator 40 via the line 33 for a distillation therein and is subjected to various upgrading processes such as the hydrotreating process to thereby obtain a product.

That is, the synthetic crude oil obtained by the magnetic separation process is introduced into the fractionator 40 via the line 33 so as to be fractionally distilled therein. Additionally, for example, a naphtha fraction (having a boiling point of approximately less than 150°C) is fractionally distilled via a line 41, a middle fraction (having a boiling point in the range of from approximately 150°C to approximately 350°C) is fractionally distilled via a line 42, and then a wax fraction (having a boiling point of approximately more than 350°C) is fractionally distilled via a line 43. In the drawings, three fractions are obtained by the fractional distillation, but two fractions may be obtained or three or more fractions may be obtained by the fractional distillation. Additionally, the synthetic crude oil may be supplied to the subsequent upgrading process without a particular fractional distillation. After the fractional distillation, the fractions are subjected to various upgrading processes such as the hydrotreating process to thereby obtain a product.

As a specific hydrotreating process, the naphtha fraction (having a boiling point of approximately less than 150°C) may be subjected to a hydrotreating process using a hydrotreating device. The middle fraction (having a boiling point in the range of from 150°C to approximately 350°C) may be subjected to a hydroisomerizing process using a hydroisomerizing device (a reaction in which liquid hydrocarbon is isomerized or hydrogen is added to an unsaturated linkage to be saturated). Alternatively, the wax fraction (having a boiling point of approximately more than 350°C) may be subjected to a hydrocracking process using a hydrocracking device.

(Example 1)

Synthesis gas obtained by reforming natural gas and mainly containing carbon monoxide and hydrogen gas is introduced into a hydrocarbon synthesis reactor (FT synthesis reactor) 10 of a bubble column type via the line 1 so as to induce a reaction with a slurry having suspended FT catalyst particles (having an average particle diameter is 100 $\mu$m and supporting cobalt as active metal of 30 wt%), thereby synthesizing liquid hydrocarbons.

The liquid hydrocarbons synthesized in the FT synthesis reactor 10 are extracted from the FT synthesis reactor 10 via the line 3 in a form of a slurry containing FT catalyst particles. The catalyst particles are removed from the extracted slurry by the first solid-liquid separator (the gravitational sedimentation separator) 20 disposed at the downstream of the FT synthesis reactor 10.

Subsequently, synthetic crude oil (liquid A) containing the catalyst particles, which cannot be separated by the first solid-liquid separator 20, is introduced to the electromagnetic high gradient magnetic separator (FEROSEP (trademark)) 30, thereby separating the catalyst particles which are solid components.

In the second solid-liquid separation process, a residual magnetic particle concentration (mass ppm) at the inlet and outlet of the magnetic separator 30 and a magnetic particle removal ratio by means of the magnetic separation process are marked in TABLE 1.

Here, the residual magnetic particle concentration (mass ppm) at the inlet and outlet of the magnetic separator indicates a value based on the weight of the slurry or oil and calculated on the basis of a measurement result using a laser diffraction particle size analyzer (SALD-3100) manufactured by SHIMADZU Corporation. The FT catalyst particle concentration contained in the synthetic crude oil (liquid A) becomes larger as the particle concentration at the inlet becomes higher. In the case where the particle concentration at the outlet becomes stable, a load applied to the magnetic separator becomes higher as the particle concentration at the inlet becomes higher.

Additionally, the high gradient magnetic separator 30 used in the second solid-liquid separation process includes the line 35 for washing the inside thereof and the line 34 as a washing liquid discharge pipe for discharging the washing liquid. By means of the intermittent washing operation, the catalyst particles separated from the synthetic crude oil are discharged to the outside of the system. The washing interval at this time is marked in TABLE 1. Additionally, as the washing liquid, a part of the FT synthetic crude oil (liquid B) flowing through the line 33 is used.

The synthetic crude oil (liquid B) obtained by the second solid-liquid separation process is introduced to the fractionator 40, and is fractionally distilled into the naphtha fraction (having a boiling point of approximately less than 150°C), the middle fraction (having a boiling point in the range of from approximately 150°C to approximately 350°C), and the wax fraction (having a boiling point of approximately more than 350°C).

(Example 2)

The sedimentation time of the gravitational sedimentation separator 20 used in the first solid-liquid separation process is adjusted so that the residual particle concentration (mass ppm) at the inlet of the magnetic separator is equal to the concentration marked in TABLE 1. Additionally, the process condition for the high gradient magnetic separator used in the second solid-liquid separation process is changed to the values shown in TABLE 1. Other conditions are the same as those of Example 1.

(Comparative Example 1)

Only the second solid-liquid separation process is carried out without carrying out the first solid-liquid separation process. The process condition for the high gradient magnetic separator used in the second solid-liquid separation process is changed to the values shown in TABLE 1. Other conditions are the same as those of Example 1. In this case, since the residual magnetic particle concentration at the inlet of the high gradient magnetic separator is high, the magnetic particle concentration at the outlet was not able to be reduced to 10 mass ppm. As a result, the high gradient magnetic separator cannot be operated.

(Comparative Example 2)

Only the second solid-liquid separation process is carried out without carrying out the first solid-liquid separation process. The process condition for the high gradient magnetic separator used in the second solid-liquid separation process is changed to the values shown in TABLE 1. Additionally, the FT synthesis reaction is carried out in a condition such that the residual particle concentration at the inlet of the magnetic separator is equal to 1,000 mass ppm. Other conditions are the same as those of Example 1.

[TABLE 1]

| | | EXAMPLE 1 | EXAMPLE 2 | COMPARATIVE EXAMPLE 1 | COMPARATIVE EXAMPLE 2 |
|---|---|---|---|---|---|
| FIRST SOLID-LIQUID SEPARATOR | | GRAVITATIONAL SEDIMENTATION SEPARATOR | GRAVITATIONAL SEDIMENTATIOBN SEPARATOR | NO | NO |
| SECOND SOLID-LIQUID SEPARATOR (MAGNETIC SEPARATOR) | | FEROSEP | FEROSEP | FEROSEP | FEROSEP |
| PROCESS CONDITION FOR SECOND MAGNETIC SEPARATION | MAGNETIC FIELD STRENGTH (Gauss) | 30000 | 30000 | 50000 | 50000 |
| | PROCESS TEMPERAIURE (°C) | 150 | 150 | 150 | 150 |
| | LIQUID RESIDENCE TIME (SECOND) | 70 | 30 | 150 | 120 |
| RESIDUAL MAGNETIC PARTICLE CONCENTRATION (mass ppm) | (INLET OF MAGNETIC SEPARATOR) | 50 | 20 | 10000 | 1000 |
| | (OUTLET OF MAGNETIC SEPARATOR) | 10 | 10 | 30 | 10 |
| MAGNETIC PARTICLE SECOND MAGNETIC REMOVAL RATIO THROUGH SEPARATION | | 0.80 | 0.50 | - | 0.99 |
| CLEANING INTERVAL IN SECOND MAGNETIC SEPARATOR | | 3.6 HOURS | 6.3 HOURS | MAGNETIC PARTICLE CONCENTRATION AT OUTLET CANNOT BE REDUCED TO 10 mass ppm | 15 MINUTES |

(Result)

In all Examples, it is possible to lengthen the washing interval by reducing the load of the high gradient magnetic separator. As compared with all Comparative Examples, it is possible to efficiently remove the magnetic particles (FT catalyst particles) from the synthetic crude oil.

(SECOND EMBODIMENT)

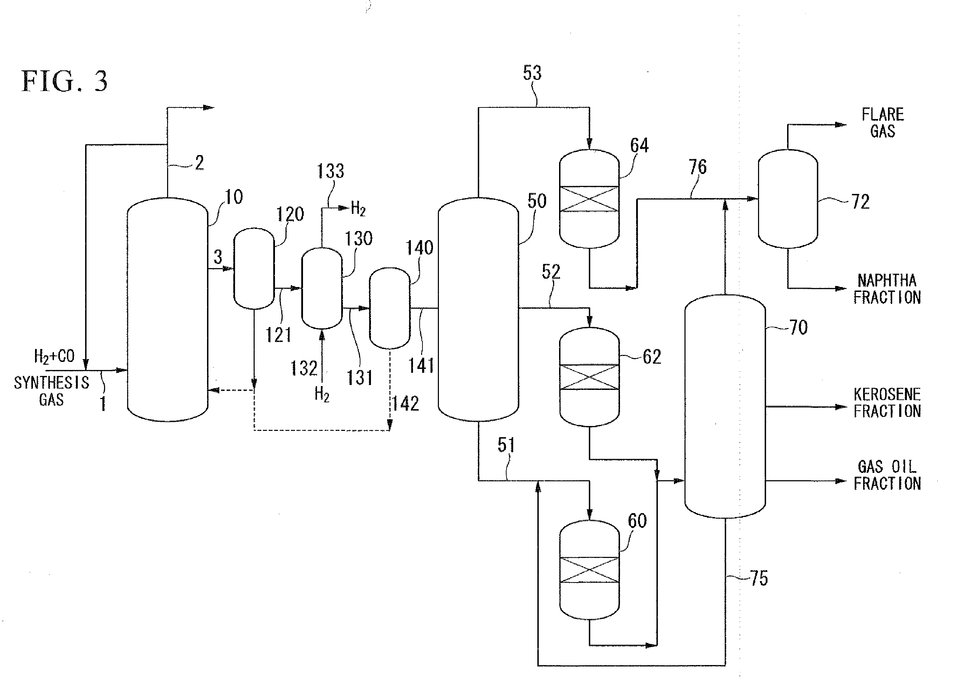

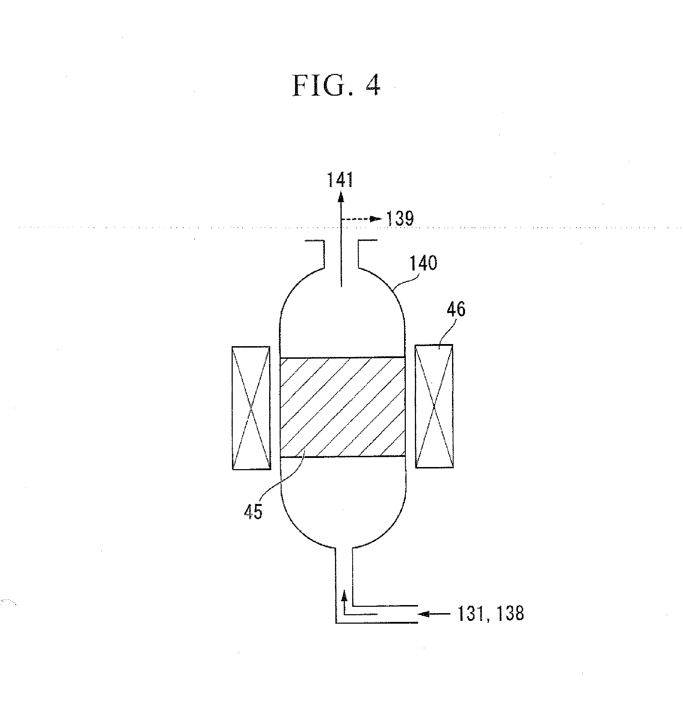

A second embodiment of the invention will be described with reference to FIGs. 3 and 4. Additionally, the same reference numerals are given to the same components as those of the first embodiment, and the description thereof will be omitted.

As shown in FIG. 3, the FT synthesis reactor system includes the FT synthesis reactor 10. The liquid hydrocarbons synthesized by the FT synthesis reactor 10 are extracted from the FT synthesis reactor 10 via the line 3 connected to the body portion of the FT synthesis reactor 10 in a form of a slurry having the suspended catalyst particles, and are introduced into a high gradient magnetic separator 140 via a solid-liquid separator 120 and a hydrogen-reduction tower 130. In the high gradient magnetic separator 140, the catalyst particles, which cannot be separated by the separator 120, are magnetically separated using magnetic separation means from the synthetic crude oil obtained by separating the solid components such as the catalyst particles from the slurry.

Hereinafter, the magnetic separation process will be described.

That is, magnetic microparticles are separated and removed from the FT synthetic crude oil by means of the high gradient magnetic separator 140. In the iron group metal as the FT synthesis catalyst, it is found that a predetermined magnetic susceptibility and paramagnetism are exhibited regardless of whether it is iron or cobalt. Accordingly, the removal by means of the magnetic separation is effective to a certain degree.

In the high gradient magnetic separator 140 used in the invention, ferromagnetic filling materials are disposed in a uniform high-magnetic-field space formed by an external electromagnetic coil, and ferromagnetic or paramagnetic microparticle materials are captured to surfaces of the filling materials by a high magnetic field gradient of 1,000 to 20,000 Gauss/cm in general formed in the periphery of the filling materials, thereby separating the solid magnetic particles such as the catalyst particles from a liquid component containing the liquid hydrocarbons. The filling materials are cleaned, and then the captured particles are removed. As the high gradient magnetic separator 140, for example, a commercially available device known by the trademark as "FEROSEP" and the like may be used.

As the ferromagnetic filling material, a ferromagnetic fine-wire assembly such as steel net or steel wool having a diameter of 1 to 1,000 $\mu$m in general, expanded metal, and a conchoidal metallic fine piece may be used. As the metal, it is desirable to use stainless steel having excellent corrosion resistance, heat resistance, and strength.

In addition, the ferromagnetic metal piece proposed in Japanese Patent Application, First Publication No. H07-70568 may be desirably used. That is, the ferromagnetic metal piece is formed in a into a plate having two planes; a larger-area surface among the two surfaces has the same area as that of a circle having a diameter of R = 0.5 to 4.0 mm; a ratio (R/d) between the diameter R and a maximum thickness d of the plate is in the range of 5 to 20; and the plate is made of Fe-Cr base alloy mainly containing Fe and additionally containing Cr of 5 to 25 wt%, Si of 0.5 to 2 wt%, and C of 2 wt% or less.

In the process of separating the magnetic particles, which cannot be separated by the separator 120, from the synthetic crude oil subjected to the process of the separator 120, the synthetic crude oil is introduced into the magnetic field space of the high gradient magnetic separator 140, and the magnetic particles are captured to the ferromagnetic filling materials disposed in the magnetic field space, thereby separating the magnetic particles from the synthetic crude oil. Next, in the process of washing and removing the magnetic microparticles captured to the filling materials, the ferromagnetic filling materials having the magnetic particles captured thereto are cleaned, thereby removing the magnetic particles from the filling materials by means of washing liquid. The filling materials have a limited surface area used to capture the magnetic particles. Thus, when the magnetic particle capturing amount is equal to a certain amount or a limited amount, the magnetic field is terminated so as to separate the magnetic particles from the filling materials. Subsequently, the filling materials are cleaned by the washing liquid, and then the magnetic particles are discharged to the outside of the magnetic separator together with the washing liquid. A magnetic separation condition for the magnetic particles contained in the washing liquid and a washing and removing condition for the magnetic particles captured to the filling materials will be described herebelow.

As the magnetic separation condition for the high gradient magnetic separator 140, the magnetic field intensity is desirably 5,000 Gauss or more, also desirably 10,000 Gauss or more, and particularly desirably 15,000 Gauss or more. A liquid temperature (process temperature) in the magnetic separator is desirably equal to or more than 100°C and equal to or less than 400°C, more desirably equal to or more than 100°C and equal to or less than 300°C, and particularly desirably equal to or more than 100°C and equal to or less tan 200°C. A liquid residence time (residence time) is desirably 10 seconds or more and more desirably 50 seconds or more.

Next, when the magnetic separation operation for the magnetic particles is continuously carried out, the removal ratio of the magnetic particles using the filling materials decreases in accordance with an increase in the amount of the magnetic particles captured by the filling materials. Accordingly, in order to maintain the removal ratio, it is necessary to carry out the washing and removing process for discharging the magnetic particles captured by the filling materials to the outside of the magnetic separator after the magnetic separation operation is continued for a predetermined time. In an industrial operation, liquid containing the magnetic particles may bypass the high gradient magnetic separator during the washing and removing process. However, when the time required for the washing operation is long, a large amount of the magnetic particles flows into a fractionator 50. Accordingly, a spare switching separator may be provided if necessary.

The washing liquid used for the washing and removing process is not particularly limited, but for example, the FT synthetic crude oil, from which the magnetic particles were removed by the magnetic separator 140, extracted via a line 141 may be used. Alternatively, a naphtha fraction, a middle fraction, and a wax fraction fractionally distilled by the fractionator 50 may be used. Alternatively, a kerosene fraction and a gas oil fraction obtained by hydrogenating these fractions or a product such as diesel fuel obtained by arbitrarily mixing the kerosene fraction and the gas oil fraction may be used. According to the invention, the FT synthetic crude oil obtained after the magnetic separation via a line 141 can be desirably used as the washing liquid.

In the washing and removing process, the magnetic field formed in the vicinity of the filling materials disappears (the current supply to the magnetic-separation electromagnetic coil stops), and the washing liquid is introduced from the bottom of the separator into the high gradient magnetic separator 140 via a line 138 (see FIG. 4) so as to allow the magnetic microparticles captured to the filling materials to be flowed outside together with the washing liquid. The washing liquid is discharged to the outside of the system via a line 139 (see FIG. 4). As the washing condition, a washing-liquid linear velocity is in the range of 1 to 10 cm/sec and desirably in the range of 2 to 6 cm/sec.

Hereinafter, the magnetic separation process will be described with reference to FIG. 4.

FIG. 4 is a schematic view showing the high gradient magnetic separator 140 used in the invention. A separation portion of the high gradient magnetic separator 140 is formed into a vertical filling vessel which is filled with the ferromagnetic filling materials. A filling tank 45 filled with the filling materials is magnetized by the magnetic lines formed by an electromagnetic coil 46 disposed on the outside of the vertical filling vessel to thereby form a high gradient magnetic separation portion. This portion corresponds to the uniform high-magnetic-field space formed by the external electromagnetic coil 46. The synthetic crude oil heated up to a temperature suitable for the operation is introduced into the bottom of the high gradient magnetic separator 140 via a line 131, and passes through the high gradient magnetic separator 140 from the downside to the upside at a predetermined flow rate (desirably, a flow rate at which the liquid residence time in the magnetic separation portion is 15 seconds or more), thereby discharging the synthetic crude oil from the top of the high gradient magnetic separator 140 via the line 141. At this time, the magnetic particles contained in the synthetic crude oil are captured to the surfaces of the filling materials during a time when the synthetic crude oil passes through the magnetic separation portion.

During a time when the FT synthetic crude oil passes through the high gradient magnetic separator 140, the washing liquid is bypassed via a washing liquid bypass line (not shown). During a time when the filling materials having the magnetic particles captured thereto are cleaned, the washing liquid is introduced into the high gradient magnetic separator 140 via a washing liquid introduction line 138. The synthetic crude oil may be bypassed via a synthetic crude oil bypass pipe (not shown) or may be transferred to the fractionator 50. In this manner, it is possible to carry out the switching operation of the removing operation and the washing operation, and the repeated continuous operation. The washing and removing process can be carried out on the basis of, for example, the method disclosed in Japanese Patent Application, First Publication No. H06-200260.

Here, since the particle in the FT slurry passing through the FT synthesis reactor 10 is fine and the amount is large, when the FT slurry passing through the FT synthesis s reactor 10 is directly subjected to the magnetic separation process, the frequency of washing filling materials increases, thereby the magnetic separation process becomes complicated.

Therefore, according to the invention, a solid-liquid separation process, as an optional process, is provided at the upstream of the magnetic separation process in addition to the magnetic separation process, thereby decreasing load of the magnetic separation process.

The solid-liquid separation process as another process in addition to the magnetic separation process is carried out by adopting a filter using an appropriate filter such as a sintered metallic filter, a gravitational sedimentation separator, a cyclone, a centrifugal separator, or the like. All known techniques may be adopted. As a gravitational sedimentation separator, for example, a sedimentation tank (a gravitational sedimentation separator) may be used which is filled with slurry for a predetermined time so that solid particles contained in the slurry are spontaneously settled. It is advantageous that the gravitational sedimentation separator have a simple structure. All of a continuous type or a batch type may be used.

Among the FT synthesis catalysts subjected to the magnetic separation process, the cobalt-base catalyst may have weak magnetism and insufficient magnetic separation efficiency in an oxidized state.

Therefore, according to the invention, the hydrogen-reduction tower 130 used for the hydrogen-reduction treatment process is provided at the upstream of the magnetic separator 140 so as to reduce the FT synthesis catalyst remained in the slurry. Additionally, according to the embodiment, the hydrogen-reduction tower 130 is provided between the separator 120 and the high gradient magnetic separator 140, but the hydrogen-reduction tower 130 may be provided at the upstream of the separator 120.

The hydrogen-reduction tower 130 is used for the hydrogen-reduction treatment process in which the catalyst particles contained in slurry is reduced in the presence of hydrogen. Specifically, the catalyst particles contained in slurry is reduced by inducing a gas-liquid contact of hydrogen introduced via a line 132 and the slurry containing the catalyst introduced via a line 121 in a counter-current flow or a parallel-current flow. In order to improve contact efficiency, a filling vessel filled with a filling material such as a ceramic ball or a raschig ring may be adopted. According to the invention, a hydrogen-reduction treatment process temperature needs to be not less than 270°C. At this time, the hydrogen-reduction treatment process temperature is desirably not less than 300°C in view of reduction promotion of metal, and desirably not more than 400°C in view of prevention of polymerization and decomposition of the wax component. Additionally, the LHSV is desirably in the range of 0.5 to 20 h$^{-1}$.

Hydrogen is introduced into the hydrogen-reduction tower 130 via the line 132, and is consumed for the hydrogen-reduction treatment process. Excessive hydrogen is discharged from the hydrogen-reduction tower 130 via the line 133. The discharged excessive hydrogen can be used as hydrogen for the hydrotreating process in the FT synthetic crude oil described below. In general, the excessive hydrogen is generated because more hydrogen than that to be consumed is fed to the hydrogen-reduction treatment process, but the excessive hydrogen is used for the hydrotreating process of the FT synthetic crude oil, which is desirable because the excessive hydrogen is efficiently used.

As described above, when the catalyst particles contained in the slurry is reduced by hydrogen, the magnetism of the metal catalyst contained in the FT synthesis slurry, for example, cobalt, increases, therefore the separation efficiency of the magnetic separator 140 is improved. In order to examine the reduction state of the metal catalyst, an appropriate amount of the catalyst particles contained in the slurry is sampled to measure magnetism thereof. In this manner, it is possible to check a state where the catalyst particles are in a predetermined reduction state. Additionally, the susceptibility can be measured by means of a SQUID magnetic flux meter.

The FT synthetic crude oil, from which the magnetic microparticles are removed by the magnetic separator 140, is introduced into the first fractionator 50 via the line 141 for a distillation therein and is subjected to various upgrading processes such as the hydrotreating process to thereby obtain a product.

That is, the synthetic crude oil obtained by the magnetic separation process is introduced into the first fractionator 50 via the line 141 so as to be fractionally distilled therein. Additionally, for example, a naphtha fraction (having a boiling point of approximately less than 150°C) is fractionally distilled via a line 53, a middle fraction (having a boiling point in the range of from approximately 150°C to approximately 350°C) is fractionally distilled via a line 52, and then a wax fraction (having a boiling point of approximately more than 350°C) is fractionally distilled via a line 51. In the drawings, three fractions are obtained by the fractional distillation, but two fractions may be obtained or three or more fractions may be obtained by the fractional distillation. Additionally, the synthetic crude oil may be supplied to the subsequent upgrading process without a particular fractional distillation.

As the hydrotreating process, the naphtha fraction (having a boiling point of approximately less than 150°C) is introduced into a hydrotreating device 64 via the line 53 so as to be hydrorefined therein. The middle fraction (having a boiling point in the range of from approximately 150°C to approximately 350°C) is introduced into a hydroisomerizing device 62 via the line 52 so as to be hydroisomerized therein. The wax fraction (having a boiling point of approximately more than 350°C) is introduced into a hydrocracking device 60 via the line 51 so as to be hydrocracked therein.

As described above, the hydrogen is introduced into the hydrogen-reduction tower 130 via the line 132 and is consumed in the hydrogen-reduction tower 130. The excessive hydrogen is discharged via the line 133. The excessive hydrogen discharged via the line 133 can be used for the hydrotreating process of the FT synthetic crude oil, such as the hydrotreating process using the hydrotreating device 64, the hydroisomerizing process using the hydroisomerizing device 62, the hydrocracking process using the hydrocracking device 60.

The hydrocracking device 60 hydrocracks the wax fraction flowed out from the bottom of the first fractionator 50. As the hydrocracking device 60, a known fixed-bed reactor may be used. According to the embodiment, in the reactor, a predetermined hydrocracking catalyst is filled into a fixed-bed reactor so as to hydrocrack the wax fraction.

The liquid hydrocarbons of the middle fraction having the substantially middle boiling point (mainly having eleven to twenty carbon atoms) are supplied from the middle portion of the first fractionator 50 to the hydrotreating device (hydroisomerizing device) 62 for the middle fraction. In the hydroisomerizing device 62, the hydroisomerizing process is carried out by means of the hydrogen. The hydroisomerizing reaction corresponds to a reaction in which liquid hydrocarbon is isomerized or hydrogen is added to an unsaturated linkage to be saturated. The product containing the hydroisomerized hydrocarbons are transferred to a second fractionator 70.

In the hydrotreating device 64 for the naphtha fraction, the naphtha fraction (mainly having ten or less carbon atoms) flowed out from the top of the first fractionator 50 is hydrorefined by means of the hydrogen gas. The product containing the hydrorefined hydrocarbons is transferred to a naphtha stabilizer 72 via a line 76. The refined naphtha fraction is obtained from the bottom of the naphtha stabilizer 72. Gas mainly containing hydrocarbon gas having four or less carbon atoms is discharged from the top of the naphtha stabilizer 72.

Subsequently, the hydrocarbons from the processes of the wax fraction hydrocracking device 60 and the middle fraction hydroisomerizing device 62 are mixed and introduced into the second fractionator 70. The second fractionator 70 distills the introduced hydrocarbons and extracts the kerosene fraction (having a boiling point in the range of approximately 150°C to approximately 250°C) and the gas oil fraction (having a boiling point in the range of from approximately 250°C to approximately 350°C). The method of mixing the hydrocarbons obtained by the processes of the wax fraction hydrocracking device 60 and the middle fraction hydroisomerizing device 62 is not particularly limited, but the hydrocarbons may be mixed in the fractionator or the line. Then, a light fraction exiting from the top of the second fractionator 70 is introduced into the naphtha stabilizer 72 via a line 76.

A bottom fraction flowed out from the bottom of the second fractionator 70 is appropriately recycled to the hydrocracking device 60 via a line 75 so as to be subjected to the hydrocracking process again, thereby improving the yield of the hydrocracking process.

As described above, it is possible to efficiently produce the naphtha fraction, the kerosene fraction, and the gas oil fraction from the FT synthetic crude oil. Also, it is possible to efficiently separate the catalyst particles from the FT slurry.

(Example 3)

(Preparation of Catalyst A)

Silica alumina (molar ratio of silica/alumina : 14), and an alumina binder were mixed and kneaded at a weight ratio of 60 : 40, and the mixture was moulded into a cylindrical form having a diameter of approximately 1.6 mm and a length of approximately 4 mm. Then, this was calcined at 500°C for one hour, thereby producing a carrier. The carrier was impregnated with a chloroplatinic acid aqueous solution to distribute platinum on the carrier. The impregnated carrier was dried at 120°C for three hours, and then, calcined at 500°C for one hour, thereby producing catalyst A. The amount of platinum loaded on the carrier was 0.8% by mass to the total amount of the carrier.

(Preparation of Catalyst B)

USY zeolite (molar ratio of silica/alumina: 37) having an average particle diameter of 1.1 $\mu$m, silica alumina (molar ratio of silica/alumina : 14) and an alumina binder were mixed and kneaded at a weight ratio of 3 : 57 : 40, and the mixture was moulded into a cylindrical form having a diameter of approximately 1.6 mm and a length of approximately 4 mm. Then, this was calcined at 500°C for one hour, thereby producing a carrier. The carrier was impregnated with a chloroplatinic acid aqueous solution to distribute platinum on the carrier. The impregnated carrier was dried at 120°C for three hours, and then, calcined at 500°C for one hour, thereby producing catalyst B. The amount of platinum loaded on the carrier was 0.8% by mass to the total amount of the carrier.

Synthesis gas obtained by reforming natural gas and mainly containing carbon monoxide and hydrogen gas is introduced into a hydrocarbon synthesis reactor (FT synthesis reactor) 10 of a bubble column type via the line 1 so as to induce a reaction with slurry having suspended FT catalyst particles (having an average particle diameter is 100 $\mu$m and supporting cobalt as active metal of 30 wt%), thereby synthesizing liquid hydrocarbons.
The liquid hydrocarbons synthesized in the FT synthesis reactor 10 are extracted from the FT synthesis reactor 10 via the line 3 in a form of slurry containing FT catalyst particles. The extracted slurry is introduced into the hydrogen-reduction tower 130 filled with the ceramic ball (having an average particle diameter of 3 mm), and undergoes a gas-liquid contact of hydrogen in a parallel-current flow in a condition such that the process temperature: 350°C and the LHSV: 1.0 h$^{-1}$. Then, the FT catalyst particles are reduced.
Additionally, the excessive hydrogen, which is not consumed in the hydrogen-reduction treatment process of the FT catalyst particles, is used again as a part of hydrogen used in the hydrotreating processes (hydrotreating devices 60, 62, and 64) at the downstream.

Subsequently, the slurry having the FT catalyst particles which were reduced is introduced to the electromagnetic high gradient magnetic separator 140 (FEROSEP (trademark)) via the line 131, and the FT catalyst particles as the solid components are separated in the process condition marked in TABLE 2. According to the embodiment, the solid-liquid separator 120 is not used for the pre-process. Additionally, the separated FT catalyst particles are recycled from the magnetic separator 140 to the FT synthesis reactor 10 via a line 142.
At this time, the average particle diameter of the FT synthesis catalyst at the inlet of the magnetic separator is 72.5 $\mu$m. The removal ratio (magnetic particle removal ratio (mass%)) of the separated FT catalyst particles is 94 mass%.

Here, the average particle diameter of the FT synthesis catalyst is measured by a laser diffraction particle size analyzer (SALD-3100) manufactured by SHIMADZU Corporation. The magnetic particle removal ratio indicates a value obtained by calculation of the following equation (hereinafter, the same applies) based on the magnetic particle concentration at the inlet of the magnetic separator, according to the measurement result obtained by the laser diffraction particle size analyzer

$$\text{Magnetic Particle Removal Ratio (mass\%)} =$$
$$100 \times \frac{(\text{Magnetic Particle Concentration at Inlet of Magnetic Separator}) - (\text{Magnetic Particle Concentration at Outlet of Magnetic Separator})}{\text{Magnetic Particle Concentration at Inlet of Magnetic Separator}}$$

The catalyst separated by the high gradient magnetic separator 140 is recycled to the FT synthesis reactor 10, and the synthetic crude oil from which the catalyst was separated in the magnetic separator 140 is introduced into the fractionator 50 via the line 141 so as to be fractionally distilled therein. Then, the naphtha fraction (having a boiling point of approximately less than 150°C) is fractionally distilled via the line 53, the middle fraction (having a boiling point in the range of from approximately 150°C to approximately 350°C) is fractionally distilled via the line 52, and then the wax fraction (having a boiling point of approximately more than 350°C) is fractionally distilled via the line 51.

(Hydroisomerizing Condition for Middle Fraction)

The catalyst A (150 ml) is filled into the hydroisomerizing device 62 as the fixed-bed reactor. Subsequently, the middle fraction obtained as described above is supplied to the hydroisomerizing device 62 from the top of the hydroisomerizing device 62 at a feed rate of 300 ml/h. Under a stream of hydrogen, the hydrotreating process is carried out in a reaction condition described below.
That is, concerning the middle fraction, hydrogen is supplied to the top of the hydroisomerizing device 62 so as to have a hydrogen/oil ratio of 338 NL/L, and a back pressure valve is controlled so that an inlet pressure of the hydroisomerizing device is constantly maintained at 3.0 MPa. In this condition, the hydroisomerizing reaction is carried out. The reaction temperature is 308°C. The LHSV is 1.5 h$^{-1}$.

(Hydrocracking Condition for Wax Fraction)

The catalyst B (150 ml) is filled into the fixed-bed reactor 60 as the hydrocracking device. Subsequently, the wax fraction obtained as described above is supplied to the reactor 60 from the top of the reactor 60 at a feed rate of 300 ml/h. Under a stream of hydrogen, the hydrocracking process is carried out in a reaction condition described below.
That is, concerning to the wax fraction, hydrogen is supplied to the top of the reactor (hydrocracking device) 60 so as to have a hydrogen/oil ratio of 676 NL/L, and a back pressure valve is controlled so that an inlet pressure of the hydrocracking device is constantly maintained at 4.0 MPa. In this condition, the hydrocracking reaction is carried out. The reaction temperature is 329°C. The LHSV is 2.5 h$^{-1}$.

(Fractional Distillation for Hydroisomerized Product and Hydrocracked Product)

The hydroisomerized product of the middle fraction (hydroisomerized middle fraction) and the hydrocracked product of the wax fraction (hydrocracked wax fraction) obtained as described above are mixed in the line. Subsequently, the mixture is fractionally distilled by the second fractionator 70. Subsequently, the diesel fuel base stock is extracted therefrom and is stocked in a tank (not shown).
The bottom fraction flowed out from the bottom of the second fractionator 70 is continuously recycled to the hydrocracking device 60 via the line 75 so as to be subjected to the hydrocracking process again. Additionally, the light fraction flowed out from the top of the second fractionator 70 is introduced into the line 76 so as to be transferred to the naphtha stabilizer 72.

(Comparative Example 3)

The same process as that of Example 3 is carried out except that the hydrogen-reduction tower is not provided at the downstream of the FT synthesis reactor 10 (the hydrogen-reduction treatment process is not carried out). That is, the magnetic separation is carried out without carrying out the hydrogen-reduction treatment process. At this time, the removal ratio of the separated FT catalyst particles (magnetic particle removal ratio (mass%)) is 87 mass%.

(Result)

In Example 3 in which the hydrogen-reduction treatment process is performed on the slurry at 350°C, the removal ratio of the FT catalyst particles (magnetic particles) in the liquid is more excellent to thereby obtain the better magnetic separation efficiency as compared with Comparative Example 3 in which the hydrogen-reduction treatment process is not carried out.

(Example 4)

Synthesis gas obtained by reforming natural gas and mainly containing carbon monoxide and hydrogen gas is introduced into a hydrocarbon synthesis reactor (FT synthesis reactor) 10 of a bubble column type via the line 1 so as to induce a reaction with slurry having suspended FT catalyst particles (having an average particle diameter is 100 $\mu$m and supporting cobalt as active metal of 30 wt%), thereby synthesizing liquid hydrocarbons.

The liquid hydrocarbons synthesized in the FT synthesis reactor 10 are extracted from the FT synthesis reactor 10 via the line 3 in a form of slurry containing FT catalyst particles. The extracted slurry is supplied into the solid-liquid separator 20 (sintered metallic filter: mesh size of 20 $\mu$m) disposed at the downstream of the FT synthesis reactor via the line 121, thereby removing the catalyst particles. The synthetic crude oil, from which the catalyst particles are removed, is introduced into the hydrogen-reduction tower 130 filled with the ceramic ball (having an average particle diameter of 3 mm), and undergoes a gas-liquid contact of hydrogen in a parallel-current flow in a condition such that the process temperature: 300°C and the LHSV: 1.0 h$^{-1}$. Then, the FT catalyst particles are reduced.

Additionally, the excessive hydrogen, which is not consumed in the hydrogen-reduction treatment process of the FT catalyst particles, is used as a part of hydrogen used in the hydrotreating processes (hydrotreating devices 60, 62, and 64) at the downstream.

Subsequently, the slurry having the FT catalyst particles which were reduced is introduced to the electromagnetic high gradient magnetic separator 140 (FEROSEP (trademark)) via the line 131, and the FT catalyst particles as the solid components are separated in the process condition marked in TABLE 2. According to the embodiment, the FT catalyst particles separated by the solid-liquid separator 120 and the high gradient magnetic separator 140 are recycled to the FT synthesis reactor 10 via the line 142.

At this time, the average particle diameter of the FT synthesis catalyst at the inlet of the magnetic separator is 10 $\mu$m. The removal ratio (magnetic particle removal ratio (mass%)) of the separated FT catalyst particles is 52 mass%.

The catalyst separated by the high gradient magnetic separator 140 is recycled to the FT synthesis reactor 10, and the synthetic crude oil from which the catalyst was separated in the magnetic separator 140 is introduced into the fractionator 50 via the line 141 so as to be fractionally distilled therein. Then, the naphtha fraction (having a boiling point of approximately less than 150°C) is fractionally distilled via the line 53, the middle fraction (having a boiling point in the range of from approximately 150°C to approximately 350°C) is fractionally distilled via the line 52, and then the wax fraction (having a boiling point of approximately more than 350°C) is fractionally distilled via the line 51. The fractions are subjected to the same processes as those of Example 3. Then, the diesel fuel base stock is extracted therefrom and is stocked in a tank (not shown).

(Example 5)

The same process as that of Example 4 is carried out except that the hydrogen-reduction treatment process temperature at the gas-liquid contact tower is changed to 350°C. At this time, the removal ratio (magnetic particle removal ratio (mass%)) of the separated FT synthesis catalyst particles is 56 mass%.

(Comparative Example 4)

The same process as that of Example 4 is carried out except that the hydrogen-reduction tower is not provided at the downstream of the FT synthesis reactor 10 (the hydrogen-reduction treatment process is not carried out). At this time, the removal ratio (magnetic particle removal ratio (mass%)) of the separated FT catalyst particles is 43 mass%.

(Comparative Examples 5 and 6)

The same process as that of Example 4 is carried out except that the hydrogen-reduction treatment process temperatures at the gas-liquid contact tower are changed to 200°C and 250°C, respectively. At this time, the removal ratios (magnetic particle removal ratio (mass%)) of the separated FT catalyst particles are 44 mass% in Comparative Example 5 and 46 mass% in Comparative Example 6.

[TABLE 2]

| | | EXAMPLE 3 | EXAMPLE 4 | EXAMPLE 5 | COMPA RATIVE EXAMP LE 3 | COMPARATIVE EXAMPLE 4 | COMPARATIVE EXAMPLE 5 | COMPARATIVE EXAMPLE 6 |
|---|---|---|---|---|---|---|---|---|
| HYDORGEN-REDUCTION TREATMENT PROCESS | | YES | YES | YES | NO | NO | YES | YES |
| PROCESS CONDITION FOR HYDROGEN-RE DUCTION TREATMENT PROCESS | PROCESS TEMPERATURE (°C) | 350 | 300 | 350 | - | - | 200 | 250 |
| | LHSV(h$^{-1}$) | 1.0 | 1.0 | 1.0 | - | - | 1.0 | 1.0 |
| | COUNTER-CURR ENT FLOW OR PARALLEL-CURR ENT FLOW | PARALLEL-CU RRENT FLOW | PARALLEL-CUR RENT FLOW | PARALLEL-CURR ENT FLOW | - | - | PARALLEL-CURRE NT FLOW | PARALLEL-CURRE NT FLOW |
| SOLID-LIQUID SEPARATOR OTHER THAN MAGNETIC SEPARATOR | | NO | SINTERED METALLIC FILTER AT PREVIOUS STAGE OF HYDROGEN-RE DUCTION TREATMENT PROCESS: MESH SIZE OF 20 $\mu$m | SINTERED METALLIC FILTER AT PREVIOUS STAGE OF HYDROGEN-RED UCTION TREATMENT PROCESS: MESH PROCESS: MESH SIZE OF 20 $\mu$m | NO | SINTERED METALLIC FILTER AT PREVIOUS STAGE OF HYDROGEN-RE DUCTION TREATMENT PROCESS: MESH SIZE OF 20 $\mu$m | SINTERED METALLIC FILTER AT PREVIOUS STAGE OF HYDROGEN-REDU CTION TREATMENT PROCESS: MESH SIZE OF 20 $\mu$m | SINTERED METALLIC FILTER AT PREVIOUS STAGE OF HYDROGEN-REDU CTION TREATMENT PROCESS: MESH SIZE OF 20 $\mu$m |
| HIGH GRADIENT MAGNETIC SEPARATOR (FEROSEP) | | YES | YES | YES | YES | YES | YES | YES |

16

(continued)

| | | EXAMPLE 3 | EXAMPLE 4 | EXAMPLE 5 | COMPARATIVE EXAMPLE 3 | COMPARATIVE EXAMPLE 4 | COMPARATIVE EXAMPLE 5 | COMPARATIVE EXAMPLE 6 |
|---|---|---|---|---|---|---|---|---|
| PROCESS CONDITION FOR MAGNETIC SEPARATION | MAGNETIC FIELD INTENSITY (Gauss) | 5000 | 15000 | 15000 | 5000 | 15000 | 15000 | 15000 |
| | PROCESS TEMPERATURE (°C) | 150 | 150 | 150 | 150 | 150 | 150 | 150 |
| | LIQUID RESIDENCE TIME (SECOND) | 10 | 50 | 50 | 10 | 50 | 50 | 50 |
| MAGNETIC PARTICLE REMOVAL RATIO (mass%) | | 94 | 52 | 56 | 87 | 43 | 44 | 46 |

(Result)

In Examples 4 and 5 in which the hydrogen-reduction treatment process is carried out at the process temperature of 300°C and 350°C, the removal ratio of the FT catalyst particles (magnetic particles) contained in the liquid is more excellent and the magnetic separation efficiency is better as compared with Comparative Examples 4 to 6 in which the hydrogen-reduction treatment process was not carried out or the hydrogen-reduction treatment process was carried out at the low temperature.

INDUSTRIAL APPLICABILITY

The present invention relates to a method of efficiently separating the magnetic particles, contained in the FT synthetic crude oil obtained by the Fischer-Tropsch synthesis method, from the slurry by means of the magnetic separator.

**Claims**

1. A method of removing magnetic particles from Fischer-Tropsch synthetic crude oil, the method comprising:

   a solid-liquid separation step of separating a solid component from Fischer-Tropsch synthetic crude oil produced by a Fischer-Tropsch synthesis reaction; and
   a magnetic separation step of capturing magnetic particles contained in the Fischer-Tropsch synthetic crude oil subjected to the solid-liquid separation step and separating the magnetic particles from the Fischer-Tropsch synthetic crude oil, wherein
   the magnetic separation step is carried out by means of a high gradient magnetic separator comprising a washing liquid introduction line for introducing washing liquid used to intermittently clean the captured magnetic particles and a washing liquid discharge line for discharging the washing liquid which has been used to clean the magnetic particles.

2. The method according to Claim 1, wherein the solid-liquid separation step is carried out by using any one of a filter, a gravitational sedimentation separator, a cyclone, and a centrifugal separator.

3. A method of producing Fischer-Tropsch synthetic crude oil, the method comprising:

   a hydrogen-reduction treatment step of performing a reduction treatment process at 270°C or more on a Fischer-Tropsch catalyst remaining in a slurry by inducing a gas-liquid contact of hydrogen and the slurry containing the Fischer-Tropsch catalyst flowed out from a Fischer-Tropsch synthesis reactor; and
   a magnetic separation step of capturing the Fischer-Tropsch catalyst reduced by hydrogen by means of a high gradient magnetic separator and separating the Fischer-Tropsch catalyst from the slurry.

4. The method according to Claim 3, further comprising:

   a solid-liquid separation step of separating a solid component from the slurry by using any one of a filter, a gravitational sedimentation separator, a cyclone, and a centrifugal separator, wherein
   the solid-liquid separation step is carried out before the hydrogen-reduction treatment step, between the hydrogen-reduction treatment step and the magnetic separation step, or after the magnetic separation step.

5. The method according to Claim 3 or 4, wherein in the magnetic separation step, the Fischer-Tropsch catalyst separated from the slurry is recycled to the Fischer-Tropsch synthesis reactor.

6. The method according to any one of Claims 3 to 5, further comprising:

   a hydrotreating step of performing a hydrotreating process on the obtained synthetic crude oil, wherein excessive hydrogen used for the hydrogen-reduction treatment process is used again as a part of hydrogen for the hydrotreating step for synthetic crude oil.

# FIG. 1

# FIG. 2

# FIG. 3

FLARE GAS

NAPHTHA FRACTION

KEROSENE FRACTION

GAS OIL FRACTION

H₂

H₂

H₂+CO
SYNTHESIS GAS

EP 2 261 307 A1

# FIG. 4

| INTERNATIONAL SEARCH REPORT | International application No. |
|---|---|
| | PCT/JP2009/054763 |

**A. CLASSIFICATION OF SUBJECT MATTER**
*C10G2/00*(2006.01)i, *B01J38/00*(2006.01)i, *B01J38/10*(2006.01)i

According to International Patent Classification (IPC) or to both national classification and IPC

**B. FIELDS SEARCHED**

Minimum documentation searched (classification system followed by classification symbols)
C10G1/00-99/00, B01J38/00-38/74

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2007-516065 A (Sasol Technology (Proprietary) Ltd.), 21 June, 2007 (21.06.07), Scope of Claims; Claim 1; Par. Nos. [0021], [0042], [0045], [0048], [0049], [0059]; Fig. 1 & WO 2005/005038 A1 & NO 200600705 A & GB 2418626 A & AU 2004255038 A & BR 200412565 A & CN 1822896 A & GB 2418626 B & US 2007/0197667 A1 & IN 200600554 A & CN 100404118 C & US 7466089 B2 & US 7488760 B2 | 1,2 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 09 June, 2009 (09.06.09) | 23 June, 2009 (23.06.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

| International application No. |
| --- |
| PCT/JP2009/054763 |

C (Continuation).  DOCUMENTS CONSIDERED TO BE RELEVANT

| Category* | Citation of document, with indication, where appropriate, of the relevant passages | Relevant to claim No. |
| --- | --- | --- |
| Y<br>A | US 4605678 A  (J.A.Brennan et al.),<br>12 August, 1986 (12.08.86),<br>Claim 1; column 4, line 59 to column 5,<br>line 26; column 5, lines 54 to 68; column 10,<br>line 55 to column 11, line 7<br>(Family: none) | 1,2<br>3-6 |
| Y<br>A | JP 6-200260 A  (Nippon Oil Co., Ltd. et al.),<br>19 July, 1994 (19.07.94),<br>Par. Nos. [0008], [0013], [0014], [0029] to<br>[0032]<br>& US 5543041 A          & EP 626440 A1<br>& WO 1994/011463 A1     & DE 69328247 T<br>& KR 10-0130476 B | 1,2<br>3-6 |
| A | US 6114399 A  (G.W.Roberts et al.),<br>05 September, 2000 (05.09.00),<br>Column 3, line 58 to column 4, line 39; Fig. 1<br>& US 6217830 B1 | 1,2 |
| A | JP 2002-500687 A  (Exxon Research & Engineering<br>Co.),<br>08 January, 2002 (08.01.02),<br>Claims; Fig. 1<br>& US 5821270 A          & EP 979259 A1<br>& WO 1998/050489 A1     & DE 69801321 T<br>& AU 7268198 A          & NO 995332 D<br>& BR 9809363 A          & AU 727986 B<br>& CA 2286289 A | 3-6 |
| A | US 6201030 B1  (G.L.Beer),<br>13 March, 2001 (13.03.01),<br>Claims; column 4, line 44 to column 5, line 9;<br>figures<br>(Family: none) | 3-6 |

Form PCT/ISA/210 (continuation of second sheet) (April 2007)

| **INTERNATIONAL SEARCH REPORT** | International application No. |
|---|---|
| | PCT/JP2009/054763 |

**Box No. II      Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III      Observations where unity of invention is lacking (Continuation of item 3 of first sheet)**

This International Searching Authority found multiple inventions in this international application, as follows:
(1, 2) and (3 to 6).
For detail, see extra sheet.

1. ☒ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**
the

☐ The additional search fees were accompanied by the applicant's protest and, where applicable, payment of a protest fee.

☐ The additional search fees were accompanied by the applicant's protest but the applicable protest fee was not paid within the time limit specified in the invitation.

☒ No protest accompanied the payment of additional search fees.

Form PCT/ISA/210 (continuation of first sheet (2)) (April 2007)

| INTERNATIONAL SEARCH REPORT | International application No. |
|---|---|
| | PCT/JP2009/054763 |

Continuation of Box No.III of continuation of first sheet(2)

Claim 1 relates to "a method for removing magnetic particles from a Fischer-Tropsch synthesized crude oil ···". On the other hand, claim 3 relates to "a process for producing a Fischer-Tropsch synthesized crude oil, comprising a magnetic separation step of capturing a Fischer-Tropsch catalyst reduced with hydrogen, by a high gradient magnetic separator and separating the catalyst from the slurry".

Claims 1 and 3 are common to each other in that the magnetic separation step is provided and the high gradient magnetic separator is used. As disclosed in a document US 4605678 A (J.A. Brennan and two others) stated in the international search report, however, capturing and separating catalyst particles with a high gradient magnetic separator is publicly known in the technical field of Fischer-Tropsch synthesis before the priority date of this application.

That is, claims 1 and 3 do not have a special technical feature that contributes to the prior art.

Thus, claims 1 and 3 are not so linked as to form a single inventive concept.

Form PCT/ISA/210 (extra sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008065774 A
- JP 2008065769 A
- JP 2004323626 A
- JP H0770568 B
- JP H06200260 B